# EUROPÄISCHE PATENTANMELDUNG

(11) **EP 1 033 546 A2**
(43) Veröffentlichungstag der Anmeldung: **06.09.2000**
(21) Anmeldenummer: 00890010.2
(22) Anmeldetag: 14.01.2000
(51) Int. Cl.: F28D 7/02

(54) **Wärmetauscher zur Rückgewinnung der in Abwässern enthaltenen Abwärme**

(30) Priorität: 03.03.1999 AT 36599
(71) Anmelder: Koller, Zoltan, 1140 Wien (AT)
(72) Erfinder: Koller, Zoltan, 1140 Wien (AT)
(74) Vertreter: Patentanwälte BARGER, PISO & PARTNER

(57) **Zusammenfassung**

Die Erfindung betrifft einen Wärmetauscher zur Rückgewinnung der in Abwässern, insbesondere von Wohnungen, Ein- und Mehrfamilienhäusern, Gewerbebetrieben, Industrieanlagen oder ganzen Siedlungen, enthaltenen Abwärme, durch die Frischwasser erwärmt wird, wobei eines der beiden Fluide in zumindest einer schraubenförmig gebogenen Leitung geführt wird

Die Erfindung ist dadurch gekennzeichnet, daß zumindest zwei Schraubrohre (3, 4, 5) im wesentlichen gleichen Durchmessers, umeinander jeweils schraubförmig gewunden in einem Hüllrohr (7) so angeordnet sind, daß die Schraubachse im wesentlichen mit der Hüllrohrachse zusammenfällt. Bevorzugt macht die zwischen dem Hüllrohr (7) und den Schraubrohren (3, 4, 5) verbleibende Fläche in einer Ebene normal zur Hüllrohrachse zwischen 40 % und 60 % der Hüllrohrquerschnittsfläche aus.

Die Erfindung betrifft weiters Ausgestaltungen des Wärmetauschers.

## Beschreibung

Die Erfindung betrifft einen Wärmetauscher zur Rückgewinnung der in Abwässern, insbesondere von Wohnungen, Ein- und Mehrfamilienhäusern, Gewerbebetrieben, Industrieanlagen oder ganzen Siedlungen enthaltenen Abwärme, durch die Frischwasser erwärmt wird, wobei eines der beiden Fluide in zumindest einer schraubenförmig gebogenen Leitung geführt wird.

Eine solche Vorrichtung ist aus der DE 44 02 269 A bekannt. Es wird gemäß dieser Druckschrift das Abwasser in einem ringförmigen Spalt nach unten geführt, wobei in diesem Spalt der in Aufwärtsrichtung durchflossene, aus einem schraubförmig gebogenen Kupferrohr bestehende Wärmetauscher angeordnet ist. Im inneren Kern befindet sich ein Überlaufrohr, durch das sichergestellt wird, daß die Anlage vollständig mit Wasser gefüllt ist. In diesem inneren Bereich befindet sich, soweit dies aus der nur einen Absatz umfassenden Beschreibung entnommen werden kann, auch der geradlinig nach unten führende Zuleitungsstutzen für das kalte Wasser, so daß es auch in diesem Bereich zu einem Wärmeübergang kommt.

Andere vorbekannte Systeme sind, in chronologischer Reihenfolge, aus folgenden Druckschriften entnehmbar:

Aus der FR 1 171 345 A, die Wärme aus dem Abwasser einer Waschmaschine zurückgewinnen will ist bekannt, dazu ein vertikales Zentralrohr vorzusehen, an dem schraubförmig verlaufende Flügel angeordnet sind, die bis zu einem äußeren Hüllrohr reichen, so daß im Ringspalt zwischen dem Zentralrohr und dem Hüllrohr eine schraubförmige Bewegung des zuströmenden Wassers erfolgt, während im Zentralrohr eine lineare Abwärtsbewegung des Abwassers erfolgt.

Die US 3 946 802 A beschäftigt sich prinzipiell mit Wärmerückgewinnung von Abwärme eines Haushaltes und zeigt die Art der verwendeten Wärmetauscher rein schematisch in der einzigen Figur. Dabei ist jeweils eine aus einem Rohr gebildete Schraubwendel im Inneren eines Hüllrohres dargestellt, ohne daß dieser Darstellung mehr als schematische Deutung zukommt. Soweit diese Darstellung als realistisch angesehen wird, ist auch hier ein im wesentlichen lineares Abwärtsströmen innerhalb und außerhalb der Schraubwendel anzunehmen, wobei aufgrund der Ausbildung und Dimensionsverhältnisse der Flüssigkeitsdurchfluß im Inneren der Schraubwendel sicherlich einfach linear dem Rohr folgend verläuft.

Die DE 26 46 622 A offenbart die Wärmerückgewinnung aus einem Klärbehälter, wobei eine Leitung zu einer Schraubspirale mit großem Abstand der einzelnen Wendeln gebogen ist und im an sich ruhenden Medium des Klärbehälters fixiert ist. Unter Schraubspirale ist eine Schraube mit stetig abnehmenden Radius zu verstehen, so wie wenn auf einen Kegelmantel eine Schraube gewickelt wird. Es kommt bei dieser Vorrichtung zu völlig undefinierten Strömungsverhälnissen, die ausschließlich konvektiver Natur sind, da ja im Klärbehälter keine Zwangsbewegung stattfindet. Nur die Strömung durch das Wärmetauscherrohr wird durch eine Pumpe bedingt und führt bei den gezeigten Abmessungen zu einer rein dem Rohr folgenden Strömung.

Aus der US 4 304 292 ist es bekannt, einen Siphon mit einem schraubförmigen Rohr mit speziellem Rechteckquerschnitt auszubilden um durch dieses schraubförmig gebogene Rohr Frischwasser durch das durch den Siphon fließende warme Abwasser erwärmen zu lassen. In einer weiteren Ausgestaltung ist in dieser Druckschrift vorgesehen, den Boden einer Duschtasse mit einer Spirale aus einem Frischwasserrohr auszustatten, um das in der Duschtasse anstehende Wasser abzukühlen und das in der Spirale befindliche Frischwasser zu erwärmen. In beiden Fällen ist es so, daß das Abwasser eine geradlinige Bewegung vollführt und das Frischwasser innerhalb seiner Rohrleitung sich ebenfalls dieser folgend bewegt, wobei in diesem Fall besonders bei der Ausbildung am Siphon die Oberfläche des schraubförmigen Abschnittes durch den gewählten Querschnitt praktisch glatt und für einen Wärmeübergang ungünstig wird.

Die DE 30 11 556 A offenbart Wärmetauscher, die in großen, gefäßartigen Rohrstücken untergebracht sind und aus schraubförmig bzw. spiralschraubförmig gebogenen Rohren bestehen, deren einzelne Windungen voneinander und von der Behälterwand Abstand haben. Es fließt somit auch bei diesen Wärmetauschern das Abwasser, soweit es zufolge der Größe der behälterartigen Rohrabschnitte überhaupt zu einer Zwangsströmung und nicht nur zu einer Konvektionsströmung kommt, im wesentlichen geradlinig innerhalb und außerhalb der Schraubwindungen, während in diesen das Frischwasser wiederum im wesentlichen dem Rohr folgt.

Aus der US 4 372 372 ist eine Wärmetauschvorrichtung für eine Badewanne bekannt, bei der das Frischwasser in zwei konzentrischen schraubförmigen dicht an dicht angeordneten Leitungen geführt wird und das warme Abwasser im Ringspalt zwischen diesen beiden Schrauben, in einem Ringspalt außerhalb der äußeren Schraube und einem Außenrohr und innerhalb der inneren Schraube und einem Innenrohr im wesentlichen geradlinig fließt. Durch die relativ schmalen Schlitze kommt es zu einer Verbesserung des Wärmeüberganges, wobei aber an der Bewegung der beiden Medien, die ebenfalls wie bei den oben abgehandelten Vorrichtungen verläuft, nichts geändert wird.

Aus der EP 0 492 031 A ist eine aufwendige Vorrichtung zur Wärmerückgewinnung von Sanitärinstallationen bekannt. Die eigentliche Wärmetauschvorrichtung besteht prinzipell aus einem Plattenwärmetauscher, der (ähnlich einem Wickelkondensator in der Elektrotechnik) spiralig aufgewickelt worden ist, wobei der Gegenstrombewegung normal zur Wickelachse eine weitere Gegenstrombewegung in Richtung der Wickelachse überlagert wird, so daß es zu einer Art Diagonaldurchströmung des aufgerollten Plattenwärmetauschers kommt. Diese Vorrichtung ist aufgrund ihrer Bauweise gegenüber Verunreinigungen im Abwasser empfindlich, weist aber strömungstechnisch und wärmeübergangstechnisch von allen besprochenen Vorrichtungen die besten Eigenschaften auf, da die Durchströmquerschnitte für die beiden Fluide im wesentlichen gleich groß sind, was ja erstrebenswert ist, da im häuslichen Sanitärwesen Zu- bzw. Abfluß im wesentlichen gleich groß sind, wenn man vom Zeitversatz beispielsweise bei Füllen und Leeren von Badewannen absieht.

Schließlich ist aus der US 5 143 149 A ein Wärmetauscher bekannt, der in einen vergrößerten Siphon integriert ist, wobei das Frischwasser in einer schraubförmig ausgebildeten Leitung im Wandbereich des Siphons strömt. Die bei den oben (außer der EP 0 492 031 A) genannten Druckschriften genannten Wärmeübergangsprobleme und die ineffektive Durchströmung treten bei dieser Vorrichtung ebenfalls auf.

Im Detail ist unter diesen strömungstechnischen und damit wärmeübergangstechnischen Nachteilen zu verstehen, daß das Abwasser im wesentlichen geradlinig durch die Wärmetauschvorrichtung fließt, wodurch die von der Wärmetauscheroberfläche Abstand aufweisenden Stromlinien und damit Flüssigkeitsvolumina ihre Wärme nur durch Wärmeleitung innerhalb der Flüssigkeit abgeben können und diese Wärmeleitung innerhalb der Flüssigkeit üblicherweise schlecht ist.

Gleichermaßen ist die Strömung des Frischwassers innerhalb der nur einen kleinen Querschnitt aufweisenden schraubförmig gebogenen Rohre ähnlich geradlinig bzw. pseudogeradlinig, weil das Frischwasser innerhalb des Rohres ebenfalls kaum zwangsumgelenkt wird.

Da aber der Rohrquerschnitt klein ist, kommt es im allgemeinen zum turbulenten Fließen des Frischwassers und dies, verbunden mit dem geringen Rohrdurchmesser und damit dem geringen Abstand von der Wärmetauscherfläche, führt dazu, daß die Schranke für den Wärmeübergang auf der Seites des Abwassers liegt.

Es ist das Ziel der Erfindung diese Nachteile zu vermeiden und eine Vorrichtung zu schaffen, bei der insbesondere der Wärmeübergang auf der Abwasserseite wesentlich verbessert wird.

Erfindungsgemäß ist dazu vorgesehen, zumindest zwei Rohre im wesentlichen gleichen Durchmessers, umeinander jeweils schraubenförmig zu winden und in einem Hüllrohr so anzuordnen, daß die Schraubachse im wesentlichen mit der Hüllrohrachse zusammenfällt, wobei bevorzugterweise der Hüllrohrdurchmesser so gewählt wird, daß die zwischen dem Hüllrohr und den Schraubrohren verbleibende Fläche in einer Ebene normal zur Hüllrohrachse zwischen 40 % und 60 % der Hüllrohrquerschnittsfläche ausmacht.

Auf diese Weise wird sichergestellt, daß sowohl das abfließende Abwasser als auch das Frischwasser eine schraubförmige Bewegung vollführt, durch die es zu Rotationen um die Schraublinien und damit zu einem verbesserten Wärmeübergang kommt, da immer wieder Flüssigkeitsvolumina aus dem Inneren des jeweiligen Strömungskanals an die Wand geführt werden. Durch die im wesentlichen gleichmäßige Verteilung des vorhandenen Strömungsquerschnittes kommt es zu einer Verbesserung des Wärmeüberganges, da auf beiden Seiten der Wärmetauscherfläche vergleichbare Strömungsgeschwindigkeiten und Kontaktoberflächen erzielt werden können.

Werden beispielsweise nur zwei Schraubrohre, durch die bevorzugt das Abwasser strömt, verwendet, so erhält man bei genau geometrischer Berührung der Außenseiten der Schraubrohre mit den Innenseiten des Hüllrohrs und bei Vernachlässigung der Wandstärken eine 50 : 50 Verteilung der Gesamtfläche. Bei Anordnung von drei Schraubrohren, was bevorzugt wird, nehmen die Schraubrohre, wenn sie innen am Hüllrohr anliegen, bereits etwa zwei Drittel der Querschnittsfläche ein, so daß es bevorzugt wird, den Hüllrohrdurchmesser so groß zu wählen, daß die Schraubrohre nicht am Hüllrohr (und vorteilhafterweise auch nicht aneinander) anliegen. Dies gestattet auch den Fluiddurchtritt zwischen den Schraubrohren und zwischen den einzelnen Schraubrohren und dem Hüllrohr. Bei Anordnung von vier oder noch mehreren Schraubrohren werden diese bevorzugt nicht mehr mit Kontakt untereinander angeordnet, sondern im Abstand voneinander, um die Querschnittsproportion zu wahren und die Umströmung der Schraubrohre zu verbessern.

Die Erfindung wird anhand eines Ausführungsbeispieles in der Zeichnung näher erläutert. Dabei zeigt
Die Fig.1 eine Frontansicht einer erfindungsgemäßen Wärmetauschvorrichtung, wobei das Hüllrohr entlang der Achse geschnittenen ist und
die Fig. 2 einen Schnitt entlang der Linie II-II der Fig. 1.

Wie aus der Figur hervorgeht, strömt warmes Abwasser W durch einen Anschlußstutzen 1 zu einer Verteilerkammer 2 und sodann durch drei Schraubrohre 3, 4, 5 im wesentlichen entlang von Schraublinien durch den in seiner Gesamtheit mit 6 bezeichneten Wärmetauscher und verläßt diesen durch einen zum Anschlußstutzen analogen Ablaufstutzen 1.

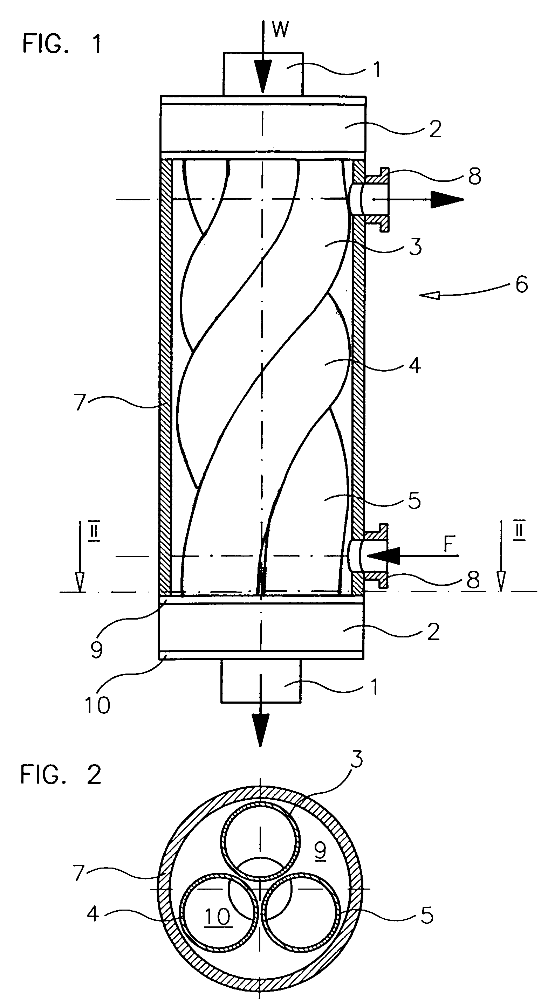

Am unteren Ende des Wärmetauschers ist eine Sammelkammer angeordnet, die bevorzugt der Verteilerkammer 2 entspricht und auch den Ablaufstutzen 1 trägt, die Vorrichtung ist vorzugsweise symmetrisch ausgebildet. Die Sammel- bzw. Verteilerkammer 2 weist einen Außenboden 10 (Fig. 2) auf, der den Anschlußstutzen 1 trägt, und einen dem Wärmetauscher zugewandten Rohrboden 9, in den die Schraubrohre 3, 4, 5 dicht eingelassen sind.

Um die drei Schraubrohre 3, 4, 5 herum und dicht mit den Verteilerkammern 2, bzw. deren Rohrböden 9, verbunden ist ein Hüllrohr 7 angeordnet, das nahe der Sammelkammern 2 Anschlußstutzen 8 für den Zulauf und Ablauf des Frischwassers F aufweist. Diese Anschlußstutzen 8 münden direkt in den Freiraum zwischen den Schraubrohren 3, 4, 5 und dem Hüllrohr 7. Um hier das Vorsehen spezieller Verteilungs- und Sammelvorrichtungen zu vermeiden, ist es notwendig, daß sowohl zwischen den Schraubrohren 3, 4, 5 als auch zwischen diesen und dem Hüllrohr 7 solche Abstände freibleiben, daß es zu einer zumindest im wesentlichen ungehinderten, gleichmäßigen Strömung um alle drei Schraubrohre 3, 4, 5 kommt.

Wie insbesondere aus Fig. 2 ersichtlich, berühren die Schraubrohre einander und das Hüllrohr 7 nicht, zumindest nicht über merkiche Teile ihrer Länge. Damit wird zwischen den Schraubrohren ein zusammenhängender Raum geschaffen, in dem das Frischwasser fließt. Durch diese Maßnahme wird das Montieren (Schweißen, Löten, Einpressen) der Schraubrohre 3, 4, 5 im Rohrboden 9 vereinfacht und es wird auch das Verhältnis der Summe der Querschnittflächen der Schraubrohre 3, 4, 5 zur freien Querschnittfläche zwischen ihnen und dem Hüllrohr 7 näher an das in den meisten Fällen gewünschte Verhältnis 1 : 1 gebracht.

Nicht dargestellt, aber bevorzugt vorgesehen ist zumindest ein Filter im Bereich des Zulaufes für das Abwasser. Dieses Filter ist bevorzugt auf einfache Weise entnehmbar und reinigbar. Es kann dieses Filter auch in der Verteilerkammer (2) angeordnet werden, wobei sodann entweder eine asymmetrische Ausbildung des Wärmetauschers vorzunehmen ist oder in der Sammelkammer 2 der Raum für das Filter einfach freigelassen wird.

Die Erfindung ist nicht auf das beschriebene und dargestellte Ausführungsbeispiel beschränkt, sondern kann verschiedentlich abgewandelt werden. So ist es selbstverständlich möglich statt der einfachen Anschlüsse 8 einen Ring vorzusehen, der mit einer Vielzahl von Öffnungen mit dem Inneren des Hüllrohres 7 in Verbindung steht und so ähnlich wie die Verteiler- und Sammelkammern 2 wirkt und für eine verbesserte gleichmäßigere Strömung, als sie beim gezeigten Ausführungsbeispiel erreicht werden kann, sorgt.

auch ist es denkbar, auf die Symmetrie zu verzichten, um speziellen Einbausituationen Rechnung zu tragen. Schließlich ist es auch denkbar, das Frischwasser durch die Schraubrohre zu führen, doch ist dies wegen der erhöhten Verstopfungsgefahr auf der Abwasserseite nicht bevorzugt.

## Patentansprüche

1. Wärmetauscher zur Rückgewinnung der in Abwässern enthaltenen Abwärme, durch die Frischwasser erwärmt wird, wobei eines der beiden Fluide in zumindest einer schraubenförmig gebogenen Leitung geführt wird, dadurch gekennzeichnet, daß zumindest zwei Schraubrohre (3, 4, 5) im wesentlichen gleichen Durchmessers, umeinander jeweils schraubförmig gewunden in einem Hüllrohr (7) so angeordnet sind, daß die Schraubachse im wesentlichen mit der Hüllrohrachse zusammenfällt, wobei bevorzugt die zwischen dem Hüllrohr (7) und den Schraubrohren (3, 4, 5) verbleibende Fläche in einer Ebene normal zur Hüllrohrachse zwischen 40 % und 60 % der Hüllrohrquerschnittsfläche ausmacht.

2. Wärmetauscher nach Anspruch 1, dadurch gekennzeichnet, daß das Abwasser durch die Schraubrohre (3, 4, 5) und das Frischwasser im Gegenstrom dazu zwischen dem Hüllrohr (7) und den Schraubrohren (3, 4, 5) fließt.

3. Wärmetauscher nach Anspruch 1 oder 2, dadurch gekennzeichnet, daß die Schraubrohre (3, 4, 5), beispielsweise durch Löten, Schweißen oder Einpressen, dicht in einem Boden (9) einer Sammelkammer (2) befestigt sind.

4. Wärmetauscher nach einem der Ansprüch 1 bis 3, dadurch gekennzeichnet, daß das Hüllrohr (7) nahe seiner Enden zumindest je einen Anschlußstutzen (8) aufweist.

5. Wärmetauscher nach einem der Ansprüch 1 bis 4, dadurch gekennzeichnet, daß zumindest im Bereich des Zulaufes, insbesondere in der Verteilerkammer (2), ein Filter für das Abwasser vorgesehen ist.
